# EUROPEAN PATENT SPECIFICATION

(11) **EP 3 632 617 B1**
(45) Date of publication and mention of the grant of the patent: **28.06.2023**
(21) Application number: 18806310.1
(22) Date of filing: 26.05.2018
(51) Int. Cl.: B24C 3/06, B24C 5/04, B24C 3/18, B25J 9/02, B25J 11/00, B25J 5/00

(54) **MOBILE BLASTING APPARATUS**
MOBILE SANDSTRAHLVORRICHTUNG
APPAREIL DE DÉCAPAGE MOBILE

(30) Priority: 26.05.2017 KR 20170065628
(43) Date of publication of application: 08.04.2020
(73) Proprietor: MSE Co., Ltd., Busan 46988 (KR)
(72) Inventor: CHOI, Jun Sik, Busan 48298 (KR)
(74) Representative: Jacobi, Markus Alexander
(86) International application number: PCT/KR2018/005984
(87) International publication number: WO 2018/217065

(56) References cited:
- EP-A1- 0 712 694
- DE-A1- 2 607 097
- JP-A- H06 142 564
- JP-B2- 3 280 051
- KR-B1- 100 665 873
- KR-B1- 101 640 564
- KR-B1- 970 004 870
- US-A- 3 827 187
- US-A1- 2002 064 596
- US-A1- 2002 074 965
- US-A1- 2017 113 325

## Description

### [Technical Field]

The present invention relates to a mobile blasting apparatus. More particularly, the present invention relates to a mobile blasting apparatus capable of reducing overall working time even when the size (e.g., length or volume) of a processed product is large, thereby preventing damage to worker health due to long working time, strong spraying of abrasives, and harmful dust.

### [Background Art]

Blasting is a method of treating the surface of a processed product, such as a steel product, and more specifically, is a washing method of removing foreign matter (e.g., rust, oil, coating films, scale, etc.) remaining on the surface of steel by strongly spraying water containing an abrasive having a relatively high hardness, such as sand, iron powder, grit, silica particles, or a combustible material, using compressed air or other means.

The blasting method is a main pretreatment process for coating, and examples thereof includes sand blasting performed by spraying mineral particles such as quartz sand or abrasives, shot blasting performed by spraying iron powder or cut wire, grit blasting performed by spraying sharp pieces of iron, and the like.

In particular, in shipyards or other factories that manufacture large products, outer surface treatment of very large products, such as wind towers for wind power generation and large storage vessels, is often performed. According to a current practice, in a workplace, operators directly spray abrasives on the surface of a processed product using high-pressure compressed air. For example, EP 0 712 694 A1 discloses a mobile blasting apparatus representing the closest prior art.

However, since the conventional blasting operation is performed by hand, when the size (e.g., length or volume) of a processed product is large, overall working time may be increased, and worker health may be damaged due to harmful dust. In addition, due to long working time and strong spraying of abrasives, the incidence of accidents may be greatly increased.

### (Disclosure]

### [Technical Problem]

Therefore, the present invention has been made in view of the above problems, and it is one object of the present invention to provide a mobile blasting apparatus having an improved structure to reduce overall working time even when the size (e.g., length or volume) of a processed product is large. According to the present invention, when the mobile blasting apparatus of the present invention is used, damage to worker health due to long working time, strong spraying of abrasives, and harmful dust may be prevented.

### [Technical Solution]

In accordance with one aspect of the present invention, provided is a mobile blasting apparatus according to the independent claim 1, wherein the mobile blasting apparatus is a blasting apparatus for spraying an abrasive onto a surface of a processed product, and includes a main body; a frame structure including a first rail extending in a first direction; a first conveying device capable of reciprocating the main body along the first rail; and a spraying device coupled to the main body and responsible for spraying the abrasive.

According to the present invention, a center of gravity of the mobile blasting apparatus may be within a predetermined distance from an imaginary vertical line extending from the first rail to a ground.

According to the present invention, the first conveying device may include a first conveying device body; a pair of first motors respectively disposed at both ends of the first conveying device body to be spaced apart from each other by a predetermined distance or more in the first direction; and a pair of wheels that are individually driven by each of the pair of first motors and are respectively disposed at both ends of the first conveying device body to be spaced apart from each other by a predetermined distance or more in the first direction.

According to the present invention, the first conveying device may include a first conveying device body; first motors; wheels driven by the first motors, wherein the wheels of the first conveying device are configured to contact an upper surface of the first rail and to perform rolling motion; and first guide rollers configured to contact a side or lower surface of the first rail and to perform rolling motion.

According to the present invention, the first rail may include a first guide beam supporting a lower surface of the first rail and extending in the first direction, wherein the first guide beam includes a web extending in a vertical direction, and a pair of flanges respectively disposed on a top and bottom of the web; and first guide rollers capable of performing rolling motion, wherein the first guide rollers are provided in one pair, are respectively disposed at left and right sides of the web to be spaced apart from each other by a predetermined distance or more, and are in contact with a lower surface of the flange disposed at a side or top of the web.

According to the present invention, the frame structure may include a second guide beam extending in the first direction, and one or more guide rollers may be provided at a rear end portion of the main body, wherein the guide rollers are configured to contact the second guide beam and to perform rolling motion.

According to the present invention, the mobile blasting apparatus includes a second conveying device capable of reciprocating the spraying device in a second direction crossing the first direction. According to the present invention, the second conveying device includes a conveying member capable of reciprocating in the second direction, wherein the conveying member is a member extending in the second direction and a front end portion thereof is coupled to the spraying device; second rails extending in the second direction; and wheels that are respectively disposed at left and right sides of a rear end portion of the conveying member and are coupled to the second rails in a configuration allowing rolling motion, wherein the wheels of the second conveying device are provided in at least two pairs, and each pair is spaced apart from the other pair by a predetermined distance or more in the second direction.

According to the present invention, the second conveying device may include a conveying member capable of reciprocating in the second direction, wherein the conveying member is a member extending in the second direction and a front end portion thereof is coupled to the spraying device; and a second motor for traveling the conveying member, wherein the second conveying device is configured so that the second motor is disposed at a rear end portion of the main body and the conveying member penetrates through the main body.

According to the present invention, the mobile blasting apparatus may include a rotary vibration device for rotating the spraying device in a reciprocating manner about a rotational axis extending in a third direction.

According to the present invention, the rotary vibration device may include a vibration motor; a crank member rotated by the vibration motor; a rod member rotated in a reciprocating manner about the rotational axis by the crank member; and a rotation shaft that extends in the third direction and is coupled to the other end of the rod member to rotate in a reciprocating manner.

According to the present invention, the rotary vibration device may include one or more hangers for fixing nozzles of the spraying device.

### [Advantageous effects]

As apparent from the foregoing, the present invention advantageously provides a mobile blasting apparatus for spraying an abrasive onto the surface of a processed product. The mobile blasting apparatus of the present invention includes a main body; a frame structure including a first rail extending in a first direction; a first conveying device capable of reciprocating the main body along the first rail; and a spraying device coupled to the main body and responsible for spraying the abrasive.

The mobile blasting apparatus further comprises a second conveying device capable of reciprocating the spraying device in a second direction crossing the first direction and wherein the second conveying device comprises a conveying member capable of reciprocating in the second direction, wherein the conveying member is a member extending in the second direction and a front end portion thereof is coupled to the spraying device; second rails extending in the second direction; and wheels that are respectively disposed at left and right sides of a rear end portion of the conveying member and are coupled to the second rails in a configuration allowing rolling motion, wherein the wheels of the second conveying device are provided in at least two pairs, and each pair is spaced apart from the other pair by a predetermined distance or more in the second direction.

With this configuration, an entire process can be automated without manual manipulation by operators. Accordingly, the mobile blasting apparatus of the present invention can reduce overall working time even when the size (e.g., length or volume) of a processed product is large, thereby preventing damage to worker health due to long working time, strong spraying of abrasives, and harmful dust.

### [Description of Drawings]

FIG. 1 is a front view of a mobile blasting apparatus according to one embodiment of the present invention.
FIG. 2 is a top view of the mobile blasting apparatus shown in FIG. 1.
FIG. 3 is a left side view of the mobile blasting apparatus shown in FIG. 1.
FIG. 4 is an enlarged view of a portion of the mobile blasting apparatus shown in FIG. 1.
FIG. 5 is an enlarged view of a portion of the mobile blasting apparatus shown in FIG. 2.

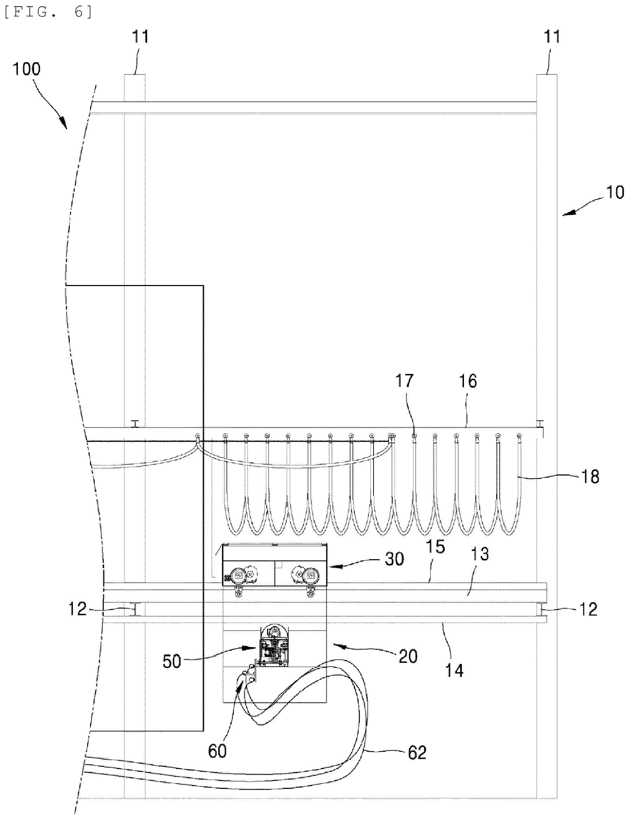

FIG. 6 is an enlarged view of a portion of the mobile blasting apparatus shown in FIG. 3.
FIG. 7 is a front view of the first conveying device shown in FIG. 1.
FIG. 8 is a right side view of the first conveying device shown in FIG. 7.

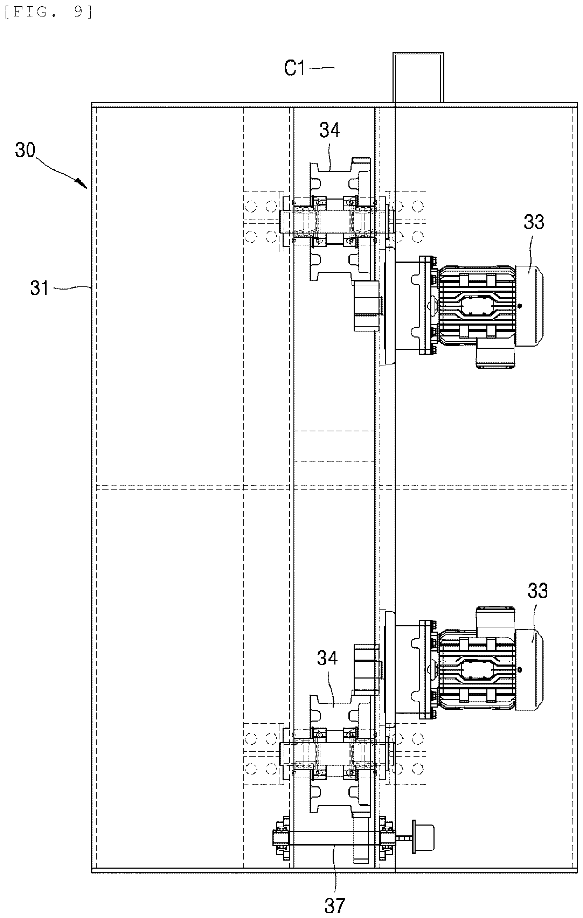

FIG. 9 is a top view of the first conveying device shown in FIG. 7.
FIG. 10 is an enlarged view of a portion of the mobile blasting apparatus shown in FIG. 4.

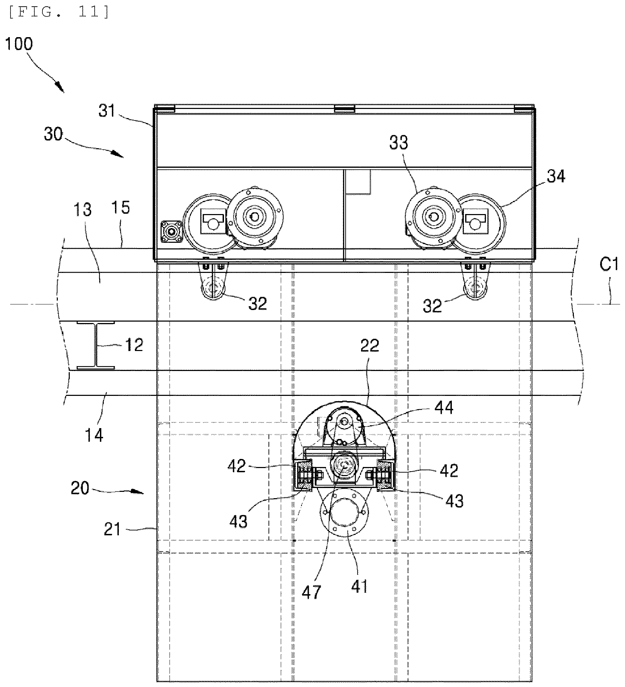

FIG. 11 is a right side view of the mobile blasting apparatus shown FIG. 10.
FIG. 12 is a top view of the mobile blasting apparatus shown FIG. 10.

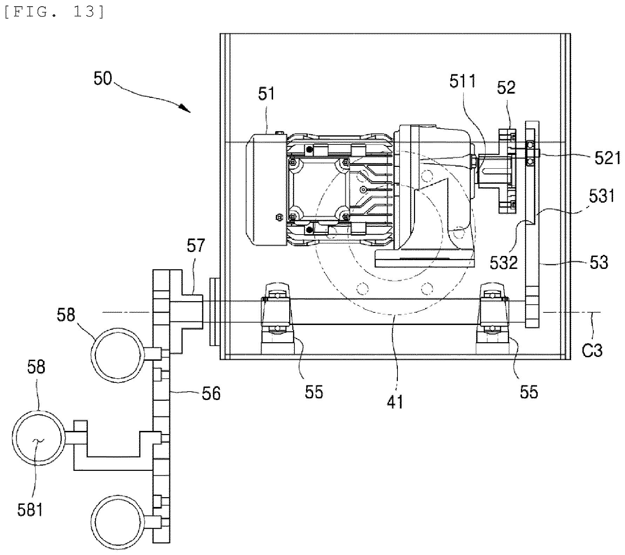

FIG. 13 is a front view of the rotary vibration device shown in FIG. 1.
FIG. 14 is a left side view of the rotary vibration device shown in FIG. 13.

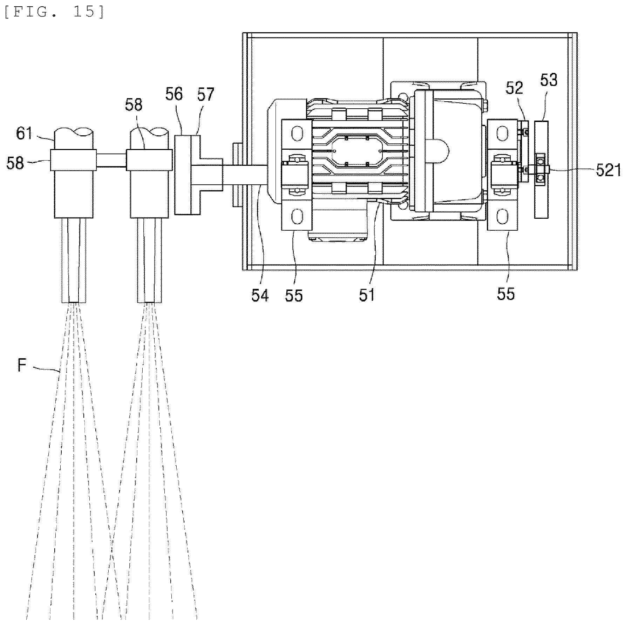

FIG. 15 is a top view of the rotary vibration device shown in FIG. 13.
FIG. 16 is a right side view of the rotary vibration device shown in FIG. 13.

### [Best mode]

Hereinafter, preferred embodiments of the present invention will be described in detail with reference to the accompanying drawings.

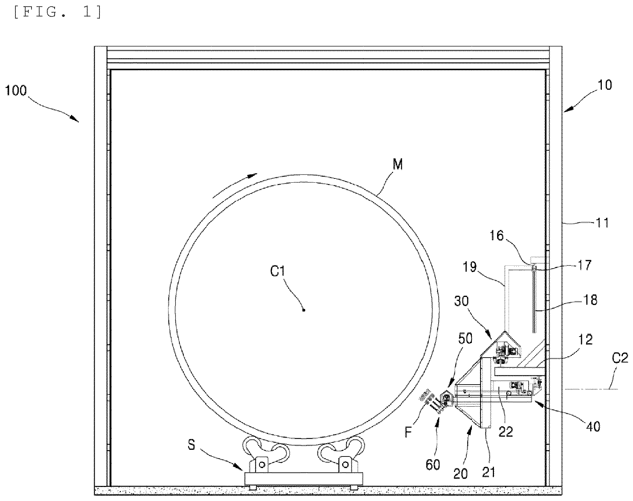

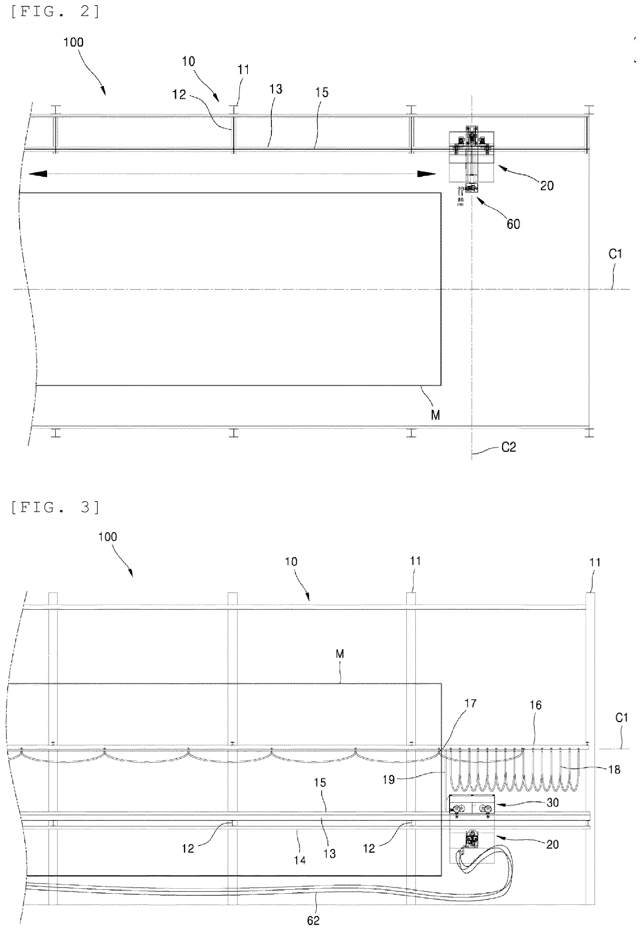

FIG. 1 is a front view of a mobile blasting apparatus according to one embodiment of the present invention, FIG. 2 is a top view of the mobile blasting apparatus shown in FIG. 1, and FIG. 3 is a left side view of the mobile blasting apparatus shown in FIG. 1.

Referring to FIGS. 1 to 3, a mobile blasting apparatus 100 according to a preferred embodiment of the present invention is a blasting apparatus for spraying an abrasive F onto the surface of a very large or bulky processed product M, such as a wind tower for wind power generation and a large storage vessel, and includes a frame structure 10, a main body 20, a first conveying device 30, a second conveying device 40, a rotary vibration device 50, and a spraying device 60.

Hereinafter, the present invention will be described on the premise that the processed product M is a pipe M for wind towers, which extends in a first direction C1 and the pipe M is rotatably supported about the first direction C1 by a product support S.

As shown in FIGS. 1 to 3, the frame structure 10 is a rectangular parallelepiped frame made of steel, and is installed at the bottom of a workplace.

As shown in FIG. 1, the frame structure 10 includes side frames 11 extending in the vertical direction.

Protrusion frames 12 are formed to protrude from the side frames 11 toward the processed product M.

The side frames 11 and the protrusion frames 12 are respectively provided in plural, and are respectively arranged to be spaced apart from each other by a predetermined interval in the first direction C1.

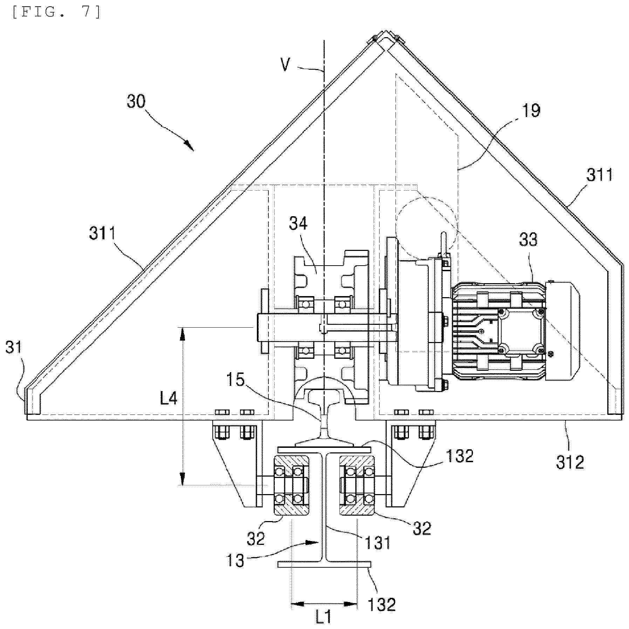

A first guide beam 13 extending in the first direction C1 is disposed on the upper surfaces of the front end portions of the protrusion frames 12. As shown in FIG. 7, the first guide beam 13 is an I-shaped beam including a web 131 extending in the vertical direction and a pair of flanges 132 disposed on the top and bottom of the web 131.

A first rail 15 extending linearly in the first direction C1 is disposed on the upper surface of the first guide beam 13. In the present embodiment, the first rail 15 is supported by the first guide beam 13.

A second guide beam 14 extending in the first direction C1 is disposed on the lower surfaces of the rear end portions of the protrusion frames 12.

Like the first guide beam 13, the second guide beam 14 is an I-shaped beam including a web extending in the vertical direction and a pair of flanges disposed on the top and bottom of the web. In the present embodiment, the web of the second guide beam 14 is shorter than the web 131 of the first guide beam 13.

A hanger rail 16 extending in the first direction C1 is disposed above the protrusion frames 12.

The hanger rail 16 is equipped with cable hangers 17 slidable in the first direction C1 in a reciprocating manner.

Cables 18 for power supply and electrical control are coupled to the cable hangers 17.

The upper end of a cable inlet 19 for receiving and guiding the cables 18 is coupled to the cable hangers 17.

The cables 18 are responsible for supplying power and transmitting various signals to the first conveying device 30, the main body 20, the second conveying device 40, and the rotary vibration device 50.

The main body 20 is the main body of the mobile blasting apparatus 100, and includes a front-end main body 21 and a rear-end main body 22.

The front-end main body 21 is a portion disposed at a position proximate to the processed product M with respect to the first rail 15.

The front-end main body 21 has an inclined surface 21 gradually narrowing toward the front and a back surface 212 in a flat form.

An upper end portion of the front-end main body 21 is coupled to the lower surface of a front end portion of the first conveying device 30.

The rear-end main body 22 is a portion disposed behind the front-end main body 21 and extending in a second direction C2 orthogonal to the first direction C1.

A front end portion of the rear-end main body 22 is coupled to the back surface 212 of the front-end main body 21, and a rear end portion of the rear-end main body 22 protrudes rearward in the second direction C2.

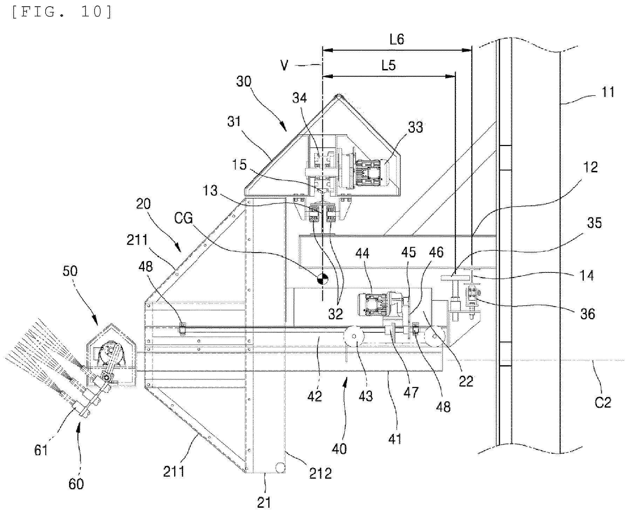

As shown in FIG. 10, a second guide roller 35 and a third guide roller 36 are in contact with the second guide beam 14, and are coupled to a rear end portion of the rear-end main body 22 in a configuration allowing rolling motion.

The second guide roller 35 is configured to contact the side surface of the web of the second guide beam 14 and to perform rolling motion, and the third guide roller 36 is configured to contact the lower surface of the lower flange of the second guide beam 14 and to perform rolling motion.

The first conveying device 30 is a conveying device capable of reciprocating the main body 20 along the first rail 15, and includes a first conveying device body 31, first guide rollers 32, first motors 33, and first wheels 34.

The first conveying device body 31 has an inclined surface 311 gradually narrowing toward the upper side and a lower surface 312 in a flat form.

The first guide rollers 32 are in contact with the side or the lower surface of the first rail 15 and are capable of performing rolling motion, and are disposed below the lower surface 312 of the first conveying device body 31.

As shown in FIG. 7, the first guide rollers 32 are provided in at least one pair, and are disposed on the left and right of the web of the first guide beam 13 so as to be spaced apart from each other by a predetermined distance L1 or more.

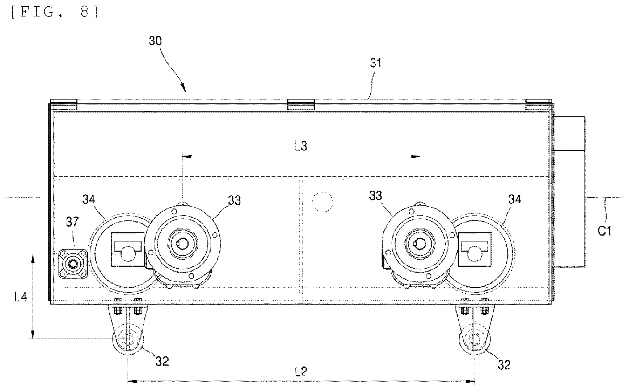

In the present embodiment, the first guide rollers 32 are provided in two pairs, which are spaced apart from each other by the predetermined distance L2 in the first direction C1. As shown in FIG. 8, each pair of the first guide rollers 32 is disposed to be spaced apart from the first wheels 34 by a predetermined distance L4 and face downward.

The first guide rollers 32 may be configured to contact the lower surfaces of the flanges 132 disposed on the side or top of the web 131 and to perform rolling motion.

In the present embodiment, instead of directly contacting the first rail 15, the first guide rollers 32 are configured to contact the lower surfaces of the flanges 132 disposed on the top of the web 131 and to perform rolling motion. In this case, the first guide beam 13 may be interpreted as a part of the first rail 15.

The first motors 33 are electrically driven rotary motors including a reduction gear therein, and are provided in one pair. The first motors 33 are respectively disposed at both ends of the first conveying device body 31 so as to be spaced apart from each other by a predetermined distance L3 or more in the first direction C1.

The first wheels 34 are wheels driven by the first motors 33. The first wheels 34 are provided in one pair, and each first wheel 34 is individually driven by a corresponding one of the pair of first motors 33.

The first wheels 34 are respectively disposed at both ends of the first conveying device body 31 to be spaced apart from each other by the predetermined distance L2 or more in the first direction C1. Here, the distance L2 between the first wheels 34 is longer than the distance L3 between the first motors 33.

The first wheels 34 are provided inside the first conveying device body 31, and are configured to contact the upper surface of the first rail 15 and to perform rolling motion.

A rotary encoder 37 for detecting the number of revolutions of the first wheels 34 is mounted inside the first conveying device body 31.

The rotary encoder 37 is a kind of controller that detects the number of revolutions of a rotating machine and sends a digital signal or an analog signal to another controller. The rotary encoder 37 includes a sensor (not shown) for detecting the number of revolutions and an electronic circuit for converting information on the number of revolutions into a digital signal or an analog signal.

The second conveying device 40 is a conveying device capable of reciprocating the spraying device 60 in the second direction C2 orthogonal to the first direction C1, and includes a conveying member 41, second rails 42, second wheels 43, a second motor 44, and a ball screw 47.

The conveying member 41 is a circular pipe member extending in the second direction C2, and a front end portion thereof is coupled to the rotary vibration device 50. The conveying member 41 is configured to reciprocate in the second direction C2.

The conveying member 41 is disposed at a lower end portion of the rear-end main body 22, and is configured to penetrate an intermediate portion of the front-end main body 21.

The second rails 42 are rails extending in the second direction C2, and has a C-shaped cross section.

The second rails 42 are provided in one pair, disposed inside the rear-end main body 22, and configured to be spaced apart from each other by a predetermined distance L7 in the first direction C1 in a state wherein C-shaped grooves face each other.

The second wheels 43 are wheels that are coupled to the C-shaped grooves of the second rails 42 so as to perform rolling motion.

The second wheels 43 are provided in at least two pairs, and the two pairs of second wheels 43 are respectively disposed at left and right sides of a rear end portion of the conveying member 41 to be spaced apart from each other by a predetermined distance L8 in the second direction C2.

The second motor 44 is an electrically driven rotary motor including a reduction gear therein, and is disposed inside the rear-end main body 22.

The ball screw 47 is a ball screw for converting rotational motion into linear motion. The ball screw 47 serves to reciprocate the conveying member 41 in a linear direction, and extends in the second direction C2.

Since the configuration of the ball screw 47 is well known to those skilled in the art, a detailed description thereof will be omitted.

Bearings 48 are mounted at both ends of the ball screw 47. The ball screw 47 is driven by a sprocket 45 mounted in the second motor 44 and a chain 46 connected to the sprocket 45.

Since the ball screw 47 is coupled to a rear end portion of the conveying member 41, when the second motor 44 rotates, the conveying member 41 travels forward or backward with respect to the processed product M in the second direction C2.

The rotary vibration device 50 is a vibration device capable of rotating the spraying device 60 in a reciprocating manner about a rotational axis C3 extending in a third direction C3, and includes a vibration motor 51, a crank member 52, a rod member 53, a rotation shaft 54, a nozzle fixing member 56, and hangers 58.

The vibration motor 51 is an electrically driven rotary motor including a reduction gear therein, and is mounted inside the rotary vibration device 50.

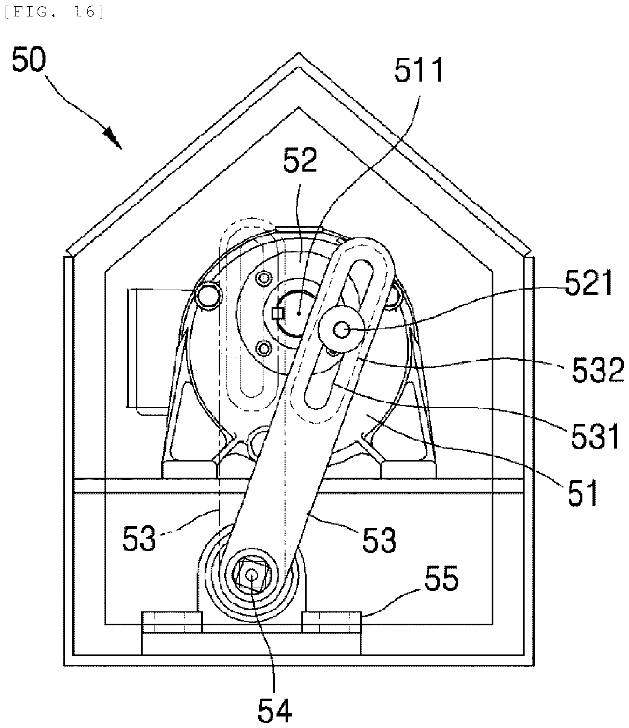

As shown in FIG. 16, the crank member 52 is a member that is rotated by the vibration motor 51, and includes a protrusion 521 disposed at a position radially spaced apart from a rotation shaft 511 of the vibration motor 51.

The rod member 53 is a rod member capable of rotating in a reciprocating manner about the rotational axis C3. In this case, the motion of rotating in a reciprocating manner is mediated by the crank member 52.

At the upper end of the rod member 53, a guide hole 531 to which the protrusion 521 is slidably coupled is formed.

The guide hole 531 extends by a predetermined length in the longitudinal direction of the rod member 53.

In the inner side surface of the guide hole 531, a locking jaw 532 for accommodating the protrusion 521 to prevent separation and detachment of the protrusion 521 is formed.

The rotation shaft 54 is a shaft extending in the third direction C3, and is supported by a pair of bearings 55 so as to be rotatable about the third direction C3. In this case, the third direction C3 is parallel to the first direction C1.

One end of the rotation shaft 54 is coupled to a lower end portion of the rod member 53 so that the rotation shaft 54 is incapable of performing relative rotation.

The nozzle fixing member 56 is a plate-shaped member that is coupled to the other end of the rotation shaft 54 by a coupler 57 so as not to be relatively rotatable.

The nozzle fixing member 56 is exposed to the outside while extending in the lower direction of the rotation shaft 54.

The hangers 58 are ring-shaped members for fixing nozzles 61 of the spraying device 60. The hangers 58 are provided in plural, and are coupled to the outer surface of the nozzle fixing member 56.

The hangers 58 are arranged so that hollows 581 face the processed product M, and are adjustable to have an optimal angle with respect to the nozzle fixing member 56.

The spraying device 60 is a device for spraying the abrasive F, and includes the nozzles 61 and hoses 62. Here, the abrasive F includes materials having a relatively high hardness, such as sand, iron powder, grit, silica particles, and combustible materials.

The nozzles 61 are nozzles for spraying the abrasive F, are provided in plural, and are respectively mounted in the hangers 58.

The hoses 62 are hoses for supplying the abrasive F supplied from an external pump to the nozzles 61, are provided in plural, and are respectively connected to rear end portions of the nozzles 61.

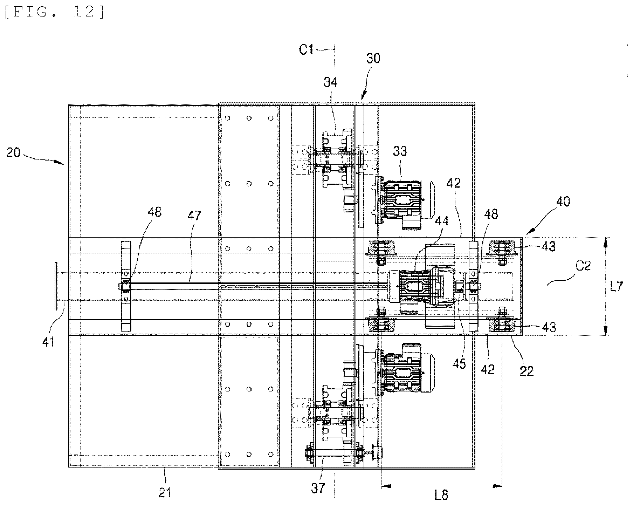

As shown in FIG. 12, the main body 20, the first conveying device 30, and the second conveying device 40 each have a symmetrical shape with respect to the second direction C2.

The main body 20, the first conveying device 30, the second conveying device 40, and the rotary vibration device 50 each have a gastight or watertight panel structure for moisture proofing and dust proofing.

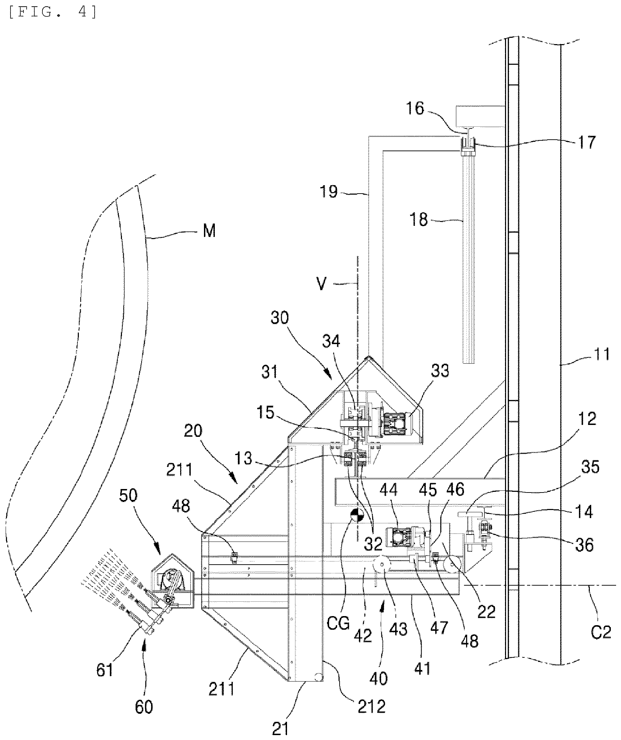

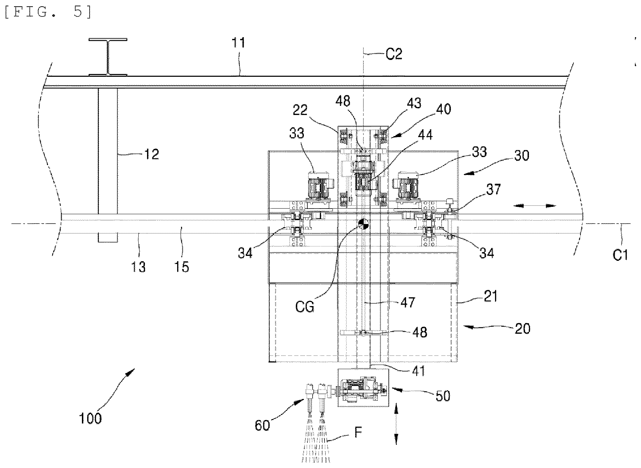

As shown in FIGS. 4 and 5, a center of gravity (CG) of the mobile blasting apparatus 100 is preferably within a predetermined distance from an imaginary vertical line (V) extending from the first rail 15 to the ground. In the present embodiment, the center of gravity (CG) is located above the imaginary vertical line (V).

The mobile blasting apparatus 100 may be automatically or semi-automatically controlled by a computer according to a pre-programmed control scheme, or may be provided with a controller (not shown) that is manually controlled by an operator.

In the present embodiment, the first conveying device 30 may travel in the first direction C1 at a speed of 8 to 15 m/min, the conveying member 41 of the second conveying device 40 may travel forward or backward in the second direction C2 at a speed of 200 to 400 mm/min, and the rotary vibration device 50 may perform rotational vibration at a frequency of 40 to 60 cycle/min in a state wherein the rotation shaft 54 is within an angle range of 20° to 35°.

In the present embodiment, the first and second conveying devices 30 and 40 are each provided with a plurality of limit switches (not shown) to prevent collision or damage due to excessive positional movement.

Hereinafter, an example of a method of using the mobile blasting apparatus 100 having the above-described configuration will be described.

First, the processed product M is placed on the product support S, and then the spraying device 60 is positioned at one end of the processed product M using the first conveying device 30.

Subsequently, the second conveying device 40 is driven so that the distance between the spraying device 60 and the processed product M is optimally adjusted, and then the rotary vibration device 50 and the spraying device 60 are driven.

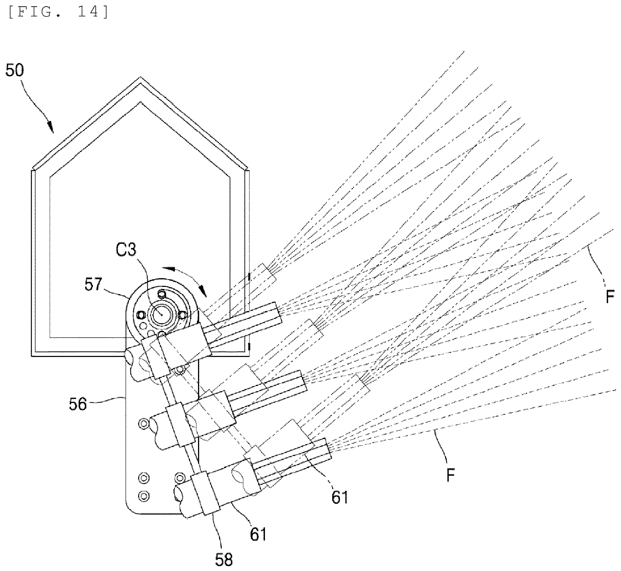

As shown in FIG. 14, when the rotary vibration device 50 and the spraying device 60 are driven, the abrasive F is sprayed from the nozzles 61 while the nozzles 61 vibrate in the vertical direction and rotate at the same time. At this time, as shown in FIG. 2, the first conveying device 30 slowly travels in the first direction C1 at a predetermined speed.

After surface treatment of a certain area of the processed product M is performed in this manner, when the processed product M is rotated by a predetermined angle about the first direction C1 by the product support S, an untreated portion in the external surface of the processed product M faces the spraying device 60. At this time, when the first conveying device 30, the rotary vibration device 50, and the spraying device 60 are driven again, the untreated portion of the processed product M is surface-treated.

As described above, when a process of rotating the processed product M by a predetermined angle using the product support S and reciprocating the first conveying device 30 in the first direction C1 in a fixed state is repeated a plurality of times, surface treatment of the entire surface area of the processed product M is completed.

The mobile blasting apparatus 100 having the above-described configuration is a blasting apparatus for spraying the abrasive F onto the surface of the processed product M, and includes the main body 20; the frame structure 10 including the first rail 15 extending in the first direction C1; the first conveying device 30 capable of reciprocating the main body 20 along the first rail 15; and the spraying device 60 coupled to the main body 20 and responsible for spraying the abrasive F. With this configuration, an entire process may be automated without manual manipulation by operators. Accordingly, the mobile blasting apparatus 100 of the present invention may reduce overall working time even when the size (e.g., length or volume) of the processed product M is large, thereby preventing damage to worker health due to long working time, strong spraying of abrasives, and harmful dust.

In addition, since the center of gravity (CG) of the mobile blasting apparatus 100 is within a predetermined distance from the imaginary vertical line (V) extending from the first rail 15 to the ground, the first rail 15 may withstand the weight of the entire apparatus, and even when the rotary vibration device 50 vibrates, the entire apparatus hardly vibrates.

In addition, in the mobile blasting apparatus 100, the first conveying device 30 includes the first conveying device body 31; the pair of first motors 33 respectively disposed at both ends of the first conveying device body 31 to be spaced apart from each other by the predetermined distance L3 or more in the first direction C1; and the pair of first wheels 34 that are individually driven by each of the pair of first motors 33 and are respectively disposed at both ends of the first conveying device body 31 to be spaced apart from each other by the predetermined distance L2 or more in the first direction C1. With this configuration, the first conveying device 30 may maintain a stable horizontal posture while traveling along the first rail 15, so that there is no risk of overturning by rotating about the second direction C2.

In addition, in the mobile blasting apparatus 100, the first rail 15 includes the first guide beam 13 supporting the lower surface of the first rail 15 and extending in the first direction C1, wherein the first guide beam 13 includes the web 131 extending in the vertical direction, and the pair of flanges 132 respectively disposed at the top and bottom of the web 131; and the first guide rollers 32 capable of performing rolling motion, wherein the first guide rollers 32 are provided in one pair, are respectively disposed at the left and right sides of the web 131 to be spaced apart from each other by the predetermined distance L1 or more, and are in contact with the lower surface of the flange 132 disposed at the top of the web 131. With this configuration, there is no risk of the first conveying device 30 being overturned by rotating about the first direction C1. In addition, since the first guide rollers 32 are accommodated in grooves formed by the web 131 and the flanges 132, separation and detachment of the first guide rollers 32 from the first guide beam 13 may be prevented, the first guide rollers 32 may be protected from external impact, and derailment of the first wheels 34 from the first rail 15 may be prevented.

In addition, in the mobile blasting apparatus 100, the frame structure 10 includes the second guide beam 14 extending in the first direction C1, and one or more guide rollers 35 and 36 are provided at the rear end portion of the main body 20, wherein the guide rollers 35 and 36 are configured to contact the second guide beam 14 and to perform rolling motion. With this configuration, due to the overturn prevention function of the first guide rollers 32, there is no risk of the main body 20 being overturned by rotating about the first direction C1. In particular, since distance L5 or L6 between the guide roller 35 or 36 and the first rail 15 is much greater than distance L4 between the first guide rollers 32 and the first wheels 34, the overturn prevention function of the guide rollers 35 and 36 is superior to that of the first guide rollers 32.

In addition, the mobile blasting apparatus 100 includes the second conveying device 40 capable of reciprocating the spraying device 60 in the second direction C2 crossing the first direction C1. With this configuration, the distance between the spraying device 60 and the processed product M may be precisely adjusted for the processed products M having various sizes.

In addition, in the mobile blasting apparatus 100, the second conveying device 40 includes the conveying member 41 capable of reciprocating in the second direction C2, wherein the conveying member 41 is a member extending in the second direction C2 and a front end portion thereof is coupled to the spraying device 60; the second rails 42 extending in the second direction C2; and the second wheels 43 that are respectively disposed at the left and right sides of a rear end portion of the conveying member 41 and are coupled to the second rails 42 in a configuration allowing rolling motion, wherein the second wheels 43 are provided in at least two pairs, and each pair is spaced apart from the other pair by a predetermined distance L8 or more in the second direction C2. With this configuration, the forward or backward travel distance of the spraying device 60 may be increased, the second wheels 43 may effectively withstand force and moment generated by the spraying device 60 and the rotary vibration device 50, and downward sagging and vibration of a front end portion of the conveying member 41 may be prevented.

In addition, in the mobile blasting apparatus 100, the second conveying device 40 includes the conveying member 41 capable of reciprocating in the second direction C2, wherein the conveying member 41 is a member extending in the second direction C2 and a front end portion thereof is coupled to the spraying device 60; and the second motor 44 for traveling the conveying member 41, wherein the second conveying device 40 is configured so that the second motor 44 is disposed at a rear end portion of the main body 20 and the conveying member 41 penetrates through the main body 20. With this configuration, it is easy to position the center of gravity (CG) of the apparatus 100 within a predetermined distance from the imaginary vertical line (V) extending from the first rail 15 to the ground.

In addition, the mobile blasting apparatus 100 includes the rotary vibration device 50 for rotating the spraying device 60 in a reciprocating manner about the rotational axis C3 extending in the third direction C3. Thus, as shown in FIG. 14, the nozzles 61 may be rotated while being vibrated in the vertical direction.

In addition, in the mobile blasting apparatus 100, the rotary vibration device 50 includes the vibration motor 51; the crank member 52 rotated by the vibration motor 51; the rod member 53 rotated in a reciprocating manner about the rotational axis C3 by the crank member 52; and the rotation shaft 54 that extends in the third direction C3 and is coupled to the other end of the rod member 53 to rotate in a reciprocating manner. With this configuration, it is easy to convert rotational motion of the vibration motor 51 into reciprocating rotational vibration of the rotation shaft 54.

In addition, in the mobile blasting apparatus 100, the rotary vibration device 50 includes one or more nozzles 61 for fixing the nozzles 61 of the spraying device 60. Thus, an operator may simply mount as many nozzles 61 as necessary on the hangers 58.

In the present embodiment, surface treatment of the outer surface of the pipe M for wind towers has been described. However, when the frame structure 10 is disposed in the hollow of the pipe M for wind towers, the inner surface of the pipe M may also be treated.

In the present embodiment, the first guide rollers 32 are configured to contact a lower surface of the flange 132 disposed on the top of the web 131 and to perform rolling motion. However, the first guide rollers 32 may also be configured to directly contact a side or lower surface of the first rail 15 and to perform rolling motion.

In the present embodiment, the first conveying device 30 includes the first motors 33 and the first wheels 34. However, instead of the first motors 33 and the first wheels 34, the first conveying device 30 may include linear motors, racks, and pinions.

In the present embodiment, the second conveying device 40 includes the second motor 44 and the ball screw 47. However, instead of the second motor 44 and the ball screw 47, the second conveying device 40 may include linear motors, racks, pinions, and hydraulic or pneumatic cylinders.

In the present embodiment, the first rail 15 linearly extends in the first direction C1. However, the first rail 15 may also be curvedly extended along any path corresponding to the shape of the processed product M.

## Claims

1. A mobile blasting apparatus (100), wherein the mobile blasting apparatus (100) is a blasting apparatus for spraying an abrasive (F) onto a surface of a processed product (M), and comprises a main body (20);
a frame structure (10) comprising a first rail (15) extending in a first direction (C1);
a first conveying device (30) capable of reciprocating the main body (20) along the first rail (15); and
a spraying device (60) coupled to the main body (20) and responsible for spraying the abrasive (F), wherein the mobile blasting apparatus (100) comprises a second conveying device (40) capable of reciprocating the spraying device (60) in a second direction (C2) crossing the first direction (C1),
**characterised in that** the second conveying device (40) comprises:
- a conveying member (41) capable of reciprocating in the second direction (C2), wherein the conveying member (41) is a member extending in the second direction (C2) and a front end portion thereof is coupled to the spraying device (60);
- second rails (42) extending in the second direction (C2); and
- wheels (43) that are respectively disposed at left and right sides of a rear end portion of the conveying member (41) and are coupled to the second rails (42) in a configuration allowing rolling motion, wherein said wheels (43) are provided in at least two pairs, and each pair is spaced apart from the other pair by a predetermined distance (L8) or more in the second direction (C2).

2. The mobile blasting apparatus (100) according to claim 1, wherein a center of gravity (CG) of the mobile blasting apparatus (100) is within a predetermined distance from an imaginary vertical line (V) extending from the first rail (15) to a ground.

3. The mobile blasting apparatus (100) according to claim 1, wherein the first conveying device (30) comprises:
- a first conveying device body (31);
- a pair of first motors (33) respectively disposed at opposite ends of the first conveying device body (31) to be spaced apart from each other by a predetermined distance (L3) or more in the first direction (C1); and
- a pair of wheels (34) that are individually driven by each of the pair of first motors (33) and are respectively disposed at opposite ends of the first conveying device body (31) to be spaced apart from each other by a predetermined distance (L2) or more in the first direction (C1).

4. The mobile blasting apparatus (100) according to claim 1, wherein the first conveying device (30) comprises:
- a first conveying device body (31);
- first motors (33);
- wheels (34) driven by the first motors (33), wherein said wheels (34) of the first conveying device (30) are configured to contact an upper surface of the first rail (15) and to perform rolling motion; and
- first guide rollers (32) configured to contact a side or lower surface of the first rail (15) and to perform rolling motion.

5. The mobile blasting apparatus (100) according to claim 1, wherein the first rail (15) comprises a first guide beam (13) supporting a lower surface of the first rail (15) and extending in the first direction (C1), wherein the first guide beam (13) comprises a web (131) extending in a vertical direction, and a pair of flanges (132) respectively disposed on a top and bottom of the web (131); and
first guide rollers (32) capable of performing rolling motion, wherein the first guide rollers (32) are provided in one pair, are respectively disposed at left and right sides of the web (131) to be spaced apart from each other by a predetermined distance (L1) or more, and are in contact with a lower surface of the flange (132) disposed at a side or top of the web (131).

6. The mobile blasting apparatus (100) according to claim 1, wherein the frame structure (10) comprises a second guide beam (14) extending in the first direction (C1), and one or more guide rollers (35, 36) are provided at a rear end (22) portion of the main body (20), wherein the guide rollers are configured to contact the second guide beam (14) and to perform rolling motion.

7. The mobile blasting apparatus (100) according to claim 1, wherein the second conveying device (40) comprises a conveying member (41) capable of reciprocating in the second direction (C2), wherein the conveying member (41) is a member extending in the second direction (C2) and a front end portion thereof is coupled to the spraying device (60); and
a second motor (44) for traveling the conveying member (41),
wherein the second conveying device (40) is configured so that the second motor (44) is disposed at a rear end (22) portion of the main body (20) and the conveying member (41) penetrates through the main body (20).

8. The mobile blasting apparatus (100) according to claim 1, wherein the mobile blasting apparatus (100) comprises a rotary vibration device (50) for rotating the spraying device (60) in a reciprocating manner about a rotational axis extending in a third direction (C3).

9. The mobile blasting apparatus (100) according to claim 8, wherein the rotary vibration device (50) comprises a vibration motor (51);
a crank member (52) rotated by the vibration motor (51);
a rod member (53) rotated in a reciprocating manner about the rotational axis by the crank member (52) ; and
a rotation shaft (54) that extends in the third direction (C3) and is coupled to an other end of the rod member (53) to rotate in a reciprocating manner.

10. The mobile blasting apparatus (100) according to claim 8, wherein the rotary vibration device (50) comprises one or more hangers (58) for fixing nozzles (61) of the spraying device (60).

## Patentansprüche

1. Eine mobile Strahlvorrichtung (100), wobei die mobile Strahlvorrichtung (100) eine Strahlvorrichtung (100) zum Sprühen eines Schleifmittels (F) auf eine Oberfläche eines verarbeiteten Produkts (M) ist und ein Hauptgehäuse (20) umfasst,
eine Rahmenstruktur (10) umfassend eine erste Schiene (15), die sich in die erste Richtung (C1) erstreckt,
eine erste Fördervorrichtung (30), die dazu ausgelegt ist, das Hauptgehäuse (20) entlang der ersten Schiene (15) hin und her zu bewegen, und
eine Sprühvorrichtung (60), die mit dem Hauptgehäuse (20) gekoppelt ist und für das Sprühen des Schleifmittels (F) ausgelegt ist, wobei die mobile Strahlvorrichtung (100) eine zweite Fördervorrichtung (40) umfasst, die dazu ausgelegt ist, die Sprühvorrichtung (60) in eine zweite Richtung (C2), welche die erste Richtung (C1) kreuzt, hin und her zu bewegen, **dadurch gekennzeichnet, dass** die zweite Fördervorrichtung (40) umfasst:
- ein Förderelement (41), das dazu ausgelegt ist, in der zweiten Richtung (C2) hin- und her bewegt zu werden, wobei das Förderelement (41) ein Element ist, das sich in die zweite Richtung (C2) erstreckt und ein vorderer Endabschnitt von diesem mit der Sprühvorrichtung (60) verbunden ist,
- zweite Schienen (42), die sich in die zweite Richtung (C2) erstecken; und
- Räder (43), welche jeweils auf der linken und rechten Seite eines hinteren Endabschnitts des Förderelements (41) angeordnet sind und mit den zweiten Schienen (42) in einer Anordnung gekoppelt sind, welche eine Rollbewegung erlaubt, wobei die Räder (43) in zumindest zwei Paaren vorgesehen sind und jedes Paar von dem anderen Paar um einen vorbestimmten Abstand (L8) oder mehr in die zweite Richtung (C2) beabstandet ist.

2. Die mobile Strahlvorrichtung (100) nach Anspruch 1, wobei ein Schwerpunkt (CG) der mobilen Strahlvorrichtung (100) innerhalb eines vorbestimmten Abstands von einer imaginären vertikalen Linie (V) liegt, die sich von der ersten Schiene (15) zu einem Boden erstreckt.

3. Die mobile Strahlvorrichtung (100) nach Anspruch 1, wobei die erste Fördervorrichtung (30) umfasst:
- ein erstes Fördergehäuse (31);
- ein Paar erste Motoren (33), die jeweils an gegenüberliegenden Enden des ersten Fördergehäuses (31) angeordnet sind, um jeweils voneinander um einen vorbestimmten Abstand (L3) oder mehr in der ersten Richtung (C1) beabstandet zu sein, und
- ein Paar Räder (34), die individuell von jedem des Paars der ersten Motoren (33) angetrieben werden und jeweils an gegenüberliegenden Enden des ersten Fördergehäuses (31) angeordnet sind, um jeweils voneinander um einen vorbestimmten Abstand (L2) oder mehr in der ersten Richtung (C1) beabstandet zu sein.

4. Die mobile Strahlvorrichtung (100) nach Anspruch 1, wobei die erste Fördervorrichtung (30) umfasst:
- ein erstes Fördergehäuse (31);
- erste Motoren (33),
- Räder (34), die von den ersten Motoren (33) angetrieben werden, wobei die Räder (34) der ersten Fördervorrichtung (30) konfiguriert sind, eine obere Oberfläche der ersten Schiene (15) zu berühren und eine Abrollbewegung auszuführen, und
- erste Führungsrollen (32), die konfiguriert sind, eine seitliche oder untere Oberfläche der ersten Schiene (15) zu berühren und eine Abrollbewegung auszuführen.

5. Die mobile Strahlvorrichtung (100) nach Anspruch 1, wobei die erste Schiene (15) einen ersten Führungsträger (13) umfasst, der eine Unterseite der ersten Schiene (15) stützt und sich in die erste Richtung (C1) erstreckt, wobei der erste Führungsträger (13) einen Steg (131), der sich in vertikale Richtung erstreckt und ein paar Flansche (132), die jeweils an einer Ober- und Unterseite des Stegs (131) angeordnet sind, umfasst; und
erste Führungsrollen (32), die dazu ausgelegt sind, eine Abrollbewegung auszuführen,
wobei die ersten Führungsrollen (32) in einem Paar vorgesehen sind, jeweils an der linken und rechten Seite des Stegs (131) angeordnet sind, um jeweils voneinander um einen vorbestimmten Abstand (L1) oder mehr beabstandet zu sein, und mit einer unteren Oberfläche des Flansches (132), der an einer Seite oder Oberfläche des Stegs (131) angeordnet ist, in Kontakt sind.

6. Die mobile Strahlvorrichtung (100) nach Anspruch 1, wobei die Rahmenstruktur (10) einen zweiten Führungsträger (14) umfasst, der sich in die erste Richtung (C1) erstreckt, und eine oder mehrere Führungsrollen (35, 36) an einem hinteren Endabschnitt (22) des Hauptgehäuses (20) vorgesehen sind, wobei die Führungsrollen konfiguriert sind, um mit dem zweiten Führungsträger (14) in Kontakt zu sein und eine Abrollbewegung auszuführen.

7. Die mobile Strahlvorrichtung (100) nach Anspruch 1, wobei die zweite Fördervorrichtung (40) ein Förderelement (41) umfasst, das geeignet ist, sich in die zweite Richtung (C2) hin- und her zu bewegen, wobei das Förderelement (41) ein Element ist, das sich in die zweite Richtung (C2) erstreckt und ein vorderer Endabschnitt von diesem mit der Sprühvorrichtung (60) gekoppelt ist, und
einen zweiten Motor (44) zum Bewegen des Förderelements (41),
wobei die zweite Fördervorrichtung (40) so konfiguriert ist, dass der zweite Motor (44) an einem hinteren Endabschnitt (22) des Hauptgehäuses (20) angeordnet ist und das Förderelement (41) das Hauptgehäuse (20) durchdringt.

8. Die mobile Strahlvorrichtung (100) nach Anspruch 1, wobei die mobile Strahlvorrichtung (100) eine Drehvibrationsvorrichtung (50) umfasst, um die Sprühvorrichtung (60) um eine Drehachse, die sich in eine dritte Richtung (C3) erstreckt, auf eine hin und her bewegende Weise zu rotieren.

9. Die mobile Strahlvorrichtung (100) nach Anspruch 8, wobei die Drehvibrationsvorrichtung (50) einen Vibrationsmotor (51) umfasst,
ein Kurbelglied (52), das durch den Vibrationsmotor (51) gedreht wird;
ein Stangenglied (53), das durch das Kurbelglied (52) um die Drehsachse auf eine hin und her bewegende Weise rotiert; und
eine Drehwelle (54), die sich in die dritte Richtung (C3) erstreckt und mit einem anderen Ende des Stangenglieds (53) gekoppelt ist, um auf eine hin und her bewegende Weise zu rotieren.

10. Die mobile Strahlvorrichtung (100) nach Anspruch 8, wobei die Drehvibrationsvorrichtung (50) eine oder mehrere Hängevorrichtungen (58) zur Befestigung von Düsen (61) der Sprühvorrichtung (60) umfasst.

## Revendications

1. Appareil de décapage mobile (100), dans lequel l'appareil de décapage mobile (100) est un appareil de décapage destiné à pulvériser un abrasif (F) sur une surface d'un produit traité (M), et comprend un corps principal (20) ;
une structure de cadre (10) comprenant un premier rail (15) s'étendant dans une première direction (C1) ;
un premier dispositif de transport (30) pouvant déplacer en va-et-vient le corps principal (20) le long du premier rail (15) ; et
un dispositif de pulvérisation (60) couplé au corps principal (20) et destiné à pulvériser l'abrasif (F),
dans lequel l'appareil de décapage mobile (100) comprend un second dispositif de transport (40) pouvant déplacer en va-et-vient le dispositif de pulvérisation (60) dans une deuxième direction (C2) croisant la première direction (C 1),
**caractérisé en ce que** le second dispositif de transport (40) comprend :
un organe de transport (41) pouvant se déplacer en va-et-vient dans la deuxième direction (C2), dans lequel l'organe de transport (41) est un organe s'étendant dans la deuxième direction (C2) et une partie d'extrémité avant de celui-ci est couplée au dispositif de pulvérisation (60) ;
des seconds rails (42) s'étendant dans la deuxième direction (C2) ; et
des roues (43) qui sont respectivement disposées sur les côtés gauche et droit d'une partie d'extrémité arrière de l'organe de transport (41) et sont couplées aux seconds rails (42) dans une configuration permettant un déplacement roulant, dans lequel lesdites roues (43) sont prévues en au moins deux paires, et chaque paire est espacée de l'autre paire d'une distance prédéterminée (L8) ou plus dans la deuxième direction (C2).

2. Appareil de décapage mobile (100) selon la revendication 1, dans lequel un centre de gravité (CG) de l'appareil de décapage mobile (100) se trouve à l'intérieur d'une distance prédéterminée d'une ligne verticale imaginaire (V) s'étendant du premier rail (15) au sol.

3. Appareil de décapage mobile (100) selon la revendication 1, dans lequel le premier dispositif de transport (30) comprend :
un premier corps de dispositif de transport (31) ;
une paire de premiers moteurs (33) disposés respectivement à des extrémités opposées du premier corps de dispositif de transport (31) de façon à être espacés l'un de l'autre d'une distance prédéterminée (L3) ou plus dans la première direction (C1) ; et
une paire de roues (34) qui sont entraînées individuellement par chacun de la paire de premiers moteurs (33) et sont respectivement disposées à des extrémités opposées du premier corps de dispositif de transport (31) de façon à être espacées l'une de l'autre d'une distance prédéterminée (L2) ou plus dans la première direction (C1).

4. Appareil de décapage mobile (100) selon la revendication 1, dans lequel le premier dispositif de transport (30) comprend :
un premier corps de dispositif de transport (31) ;
des premiers moteurs (33) ;
des roues (34) entraînées par les premiers moteurs (33), dans lequel lesdites roues (34) du premier dispositif de transport (30) sont conçues pour entrer en contact avec une surface supérieure du premier rail (15) et pour exécuter un déplacement roulant ; et
des premiers rouleaux de guidage (32) conçus pour entrer en contact avec une surface latérale ou inférieure du premier rail (15) et pour exécuter un déplacement roulant.

5. Appareil de décapage mobile (100) selon la revendication 1, dans lequel le premier rail (15) comprend une première poutre de guidage (13) supportant une surface inférieure du premier rail (15) et s'étendant dans la première direction (C1), dans lequel la première poutre de guidage (13) comprend une bande (131) s'étendant dans une direction verticale, et une paire de rebords (132) disposés respectivement sur un sommet et un fond de la bande (131) ; et
des premiers rouleaux de guidage (32) pouvant exécuter un déplacement roulant, dans lequel les premiers rouleaux de guidage (32) sont prévus en une paire, sont respectivement disposés sur les côtés gauche et droit de la bande (131) de façon à être espacés l'un de l'autre d'une distance prédéterminée (L1) ou plus, et sont en contact avec une surface inférieure du rebord (132) disposé sur un côté ou un sommet de la bande (131).

6. Appareil de décapage mobile (100) selon la revendication 1, dans lequel la structure de cadre (10) comprend une seconde poutre de guidage (14) s'étendant dans la première direction (C1), et un ou plusieurs rouleaux de guidage (35, 36) sont placés à une partie d'extrémité arrière (22) du corps principal (20), dans lequel les rouleaux de guidage sont conçus pour entrer en contact avec la seconde poutre de guidage (14) et pour exécuter un déplacement roulant.

7. Appareil de décapage mobile (100) selon la revendication 1, dans lequel le second dispositif de transport (40) comprend un organe de transport (41) pouvant se déplacer en va-et-vient dans la deuxième direction (C2), dans lequel l'organe de transport (41) est un organe s'étendant dans la deuxième direction (C2) et une partie d'extrémité avant de celui-ci est couplée au dispositif de pulvérisation (60) ; et
un second moteur (44) destiné à déplacer l'organe de transport (41),
dans lequel le second dispositif de transport (40) est conçu de telle sorte que le second moteur (44) est disposé à une partie d'extrémité arrière (22) du corps principal (20) et l'organe de transport (41) pénètre à travers le corps principal (20).

8. Appareil de décapage mobile (100) selon la revendication 1, dans lequel l'appareil de décapage mobile (100) comprend un dispositif de vibration rotatif (50) destiné à faire tourner le dispositif de pulvérisation (60) en va-et-vient autour d'un axe de rotation s'étendant dans une troisième direction (C3).

9. Appareil de décapage mobile (100) selon la revendication 8, dans lequel le dispositif de vibration rotatif (50) comprend un moteur vibrant (51) ;
un organe manivelle (52) entraîné en rotation par le moteur vibrant (51) ;
un organe tige (53) entraîné en va-et-vient autour de l'axe de rotation par l'organe manivelle (52) ; et
un arbre de rotation (54) qui s'étend dans la troisième direction (C3) et est couplé à une autre extrémité de l'organe tige (53) pour tourner en va-et-vient.

10. Appareil de décapage mobile (100) selon la revendication 8, dans lequel le dispositif de vibration rotatif (50) comprend un ou plusieurs organes de suspension (58) destinés à fixer des buses (61) du dispositif de pulvérisation (60).
